# EUROPEAN PATENT SPECIFICATION

(11) **EP 1 390 274 B1**
(45) Date of publication and mention of the grant of the patent: **24.12.2008**
(21) Application number: 01939218.2
(22) Date of filing: 22.05.2001
(51) Int. Cl.: B65D 81/00

(54) **A PACKAGE FOR A DENTAL MATERIAL**
VERPACKUNG FÜR DENTALSTOFFE
CONDITIONNEMENT POUR SUBSTANCE DENTAIRE

(43) Date of publication of application: 25.02.2004
(73) Proprietor: DENTSPLY INTERNATIONAL, INC., York, PA 17405-0872 (US)
(72) Inventor: PIERSON, Paul, Richard, Camden, DE 19934 (US)
(74) Representative: Hartz, Nikolai
(86) International application number: PCT/US2001/016397
(87) International publication number: WO 2002/094683

(56) References cited:
- EP-A- 0 237 182
- EP-A- 0 919 206
- WO-A-91/05731
- DE-A- 19 628 552
- US-A- 3 330 444

## Description

### TECHNICAL FILED

The present invention relates to a package for a dental material such as a self-etching adhesive, namely the present invention relates to a unit-dose package for the storage and dispensing of a multi-component dental adhesive. More particularly, the invention relates to a multiple-barrel storage and dispensing cartridge having a snap-open cap.

### BACKGROUND OF THE INVENTION

A device for dispensing a two-component adhesive is known from DE-A 196 28552.

Certain materials require specialized packaging for storage and dispensing of the material. Fur example, with respect to fluid or fluid-like (that is, having an ability to flow either due to gravity or to an applied force) dental materials, the materials may be light sensitive or the like, requiring packaging the prevents premature exposure of the material to light. Further, dental materials such as adhesives, often contain multiple components that need to be separated during storage but that must be mixed immediately prior to use. Further still, it is often necessary to use only a small amount of a material for a given dental procedure. Hence, it is desirable to store and dispense such materials in single use or "unit dose" sizes.

Heretofore, storage and packaging of dental materials was often accomplished with small opaque bottles. While such bottles often provided for case of storage, they do not lend themselves well to efficient dispensing operations. Further, when two or more components are to be mixed, the materials have to first be accurately measured.

A need exists therefore, for a package for storing a material and for dispensing the material, especially a dental material such as a multi-component adhesive. The package should protect the material to premature exposure to the environment; it should keep multiple components separate during storage; it should facilitate the dispensing and mixing of premeasured quantities of the material; and, it should be useful for unit dose quantities of the material to be packaged.

### DISCLOSURE OF THE INVENTION

It is therefore, and object of the present invention to provide a package for fluid or fluid-like (herein collectively referred to as "fluid") materials.

It is another object of the invention to provide a package as above, with the ability to store a plurality of components.

It is another object of the invention that the package, as above, prevents exposure of the contained material or materials to the environment until desired.

It is a further object of the invention to provide a package as above, useful in unit dose quantities of the packaged materials.

It is yet another object of the invention to provide a package that is easily and efficiently useful to an operator.

These and other objects of the invention, which will become apparent from the invention as described herein, are accomplished by the invention as claimed by claim 1.

In general, a package for the storage and dispensing of a plurality of materials comprises a first and a second longitudinally juxtaposed barrels; each said barrel having a first and a second end; each said first and second barrels having a quantity of at least one of the materials initially contained therein; each said barrel having an open end and a dispensing end; a sealing plunger disposed in each said barrel such that the material in each said barrel is initially positioned between said dispensing end of said barrels and the respective ones of said sealing plungers; a snap cap contiguously formed to initially close each of said dispensing ends of said barrels; such that said snap cap may be broken from said barrels to thereby forming secondary open ends at said dispensing ends of said barrels, thereby facilitating the material contained in each said barrel to flow through and be dispensed.

A storing and dispensing system a plurality of materials also comprise a first and a second longitudinally juxtaposed barrels; each said barrel having a first and a second end; each said first and second barrels having a quantity of at least one of the materials initially contained therein; each said barrel having a primary open end and a dispensing end; a sealing plunger disposed in each said barrel such that the material in each said barrel is initially positioned between said dispensing end of said barrels and the respective ones of said scaling plungers; a snap cap contiguously formed to initially close each of said dispensing ends of said barrels; such that said snap cap may be broken from said barrels to thereby forming a secondary open end at said dispensing end of said barrels, thereby facilitating the material contained in each said barrel to flow through and be dispensed; and, a dispensing gun having a first and a seconded laterally displaceable gun plungers, and an actuating means for laterally displacing said gun plungers; said first and second barrels having means to removably affix said barrels to said gun; said first gun plunger being receivable within said primary open end of said first barrel, and being laterally displaceable therethrough to contact said seal plunger located in said first barrel; and, said second gun plunger being receivable within said primary open end of said second barrel, and being laterally displaceable therethrough to contact said seal plunger located in said second barrel.

A package for the storage and dispensing of a plurality of materials also comprises a first and a second longitudinally juxtaposed barrels; each said barrel having a first and a second end; each said first and second barrels having a quantity of at least one of the materials initially contained therein; each said barrel having an open end and a dispensing end; a sealing plunger disposed in each said barrel such that the material in each said barrel is initially positioned between said dispensing end of said barrels and the respective ones of said sealing plungers; a snap cap contiguously formed to initially close each of said dispensing ends of said barrels; such that said snap cap may be broken from said barrels to thereby forming a secondary open end at said dispensing end of said barrels, thereby facilitating the material contained in each said barrel to flow through and be dispensed; and a mix-tip removably affixed to said first and second barrels and having a dispensing aperture, such that the material that is dispensed from said secondary openings is caused to flow through said mixtip, and out through said dispensing aperture; a static mixing element contained within said mixtip to promote intimate contact and mixing of the materials.

A storing and dispensing system a plurality of materials also comprises a first and a second longitudinally juxtaposed barrels; each said barrel having a first and a second end; each said first and second barrels having a quantity of at least one of the materials initially contained therein; each said barrel having a primary open end and a dispensing end; a sealing plunger disposed in each said barrel such that the material in each said barrel is initially positioned between said dispensing end of said barrels and the respective ones of said sealing plungers; a snap cap contiguously formed to initially close each of said dispensing ends of said barrels; such that said snap cap may be broken from said barrels to thereby forming a secondary open end at said dispensing end of said barrels, thereby facilitating the material contained in each said barrel to flow through and be dispensed; and, a dispensing gun having a first and a seconded laterally displaceable gun plungers, and an actuating means for laterally displacing said gun plungers; said first and second barrels having means to removably affix said barrels to said gun; said first gun plunger being receivable within said primary open end of said first barrel, and being laterally displaceable therethrough to contact said seal plunger located in said first barrel; and, said second gun plunger being receivable within said primary open end of said second barrel, and being laterally displaceable therethrough to contact said seal plunger located in said second barrel; and a foil seal initially closing said primary open ends of said first and second barrels, such that when said gun plungers are caused to be laterally displaced into and received by said barrels, said foil seal is first caused to be punctured by physical contact with said gun plungers.

### BRIEF DESCRIPTION OF THE DRAWINGS

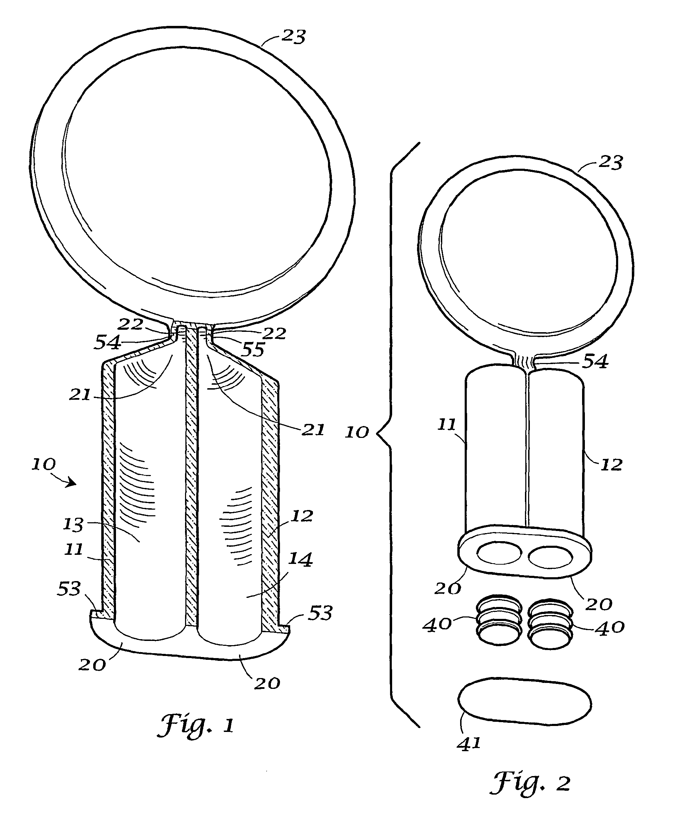

Fig. 1 is a sectional, top plan view of a package according to the invention.
Fig. 2 is a perspective view of a package according to the invention, showing component parts in an exploded manner.

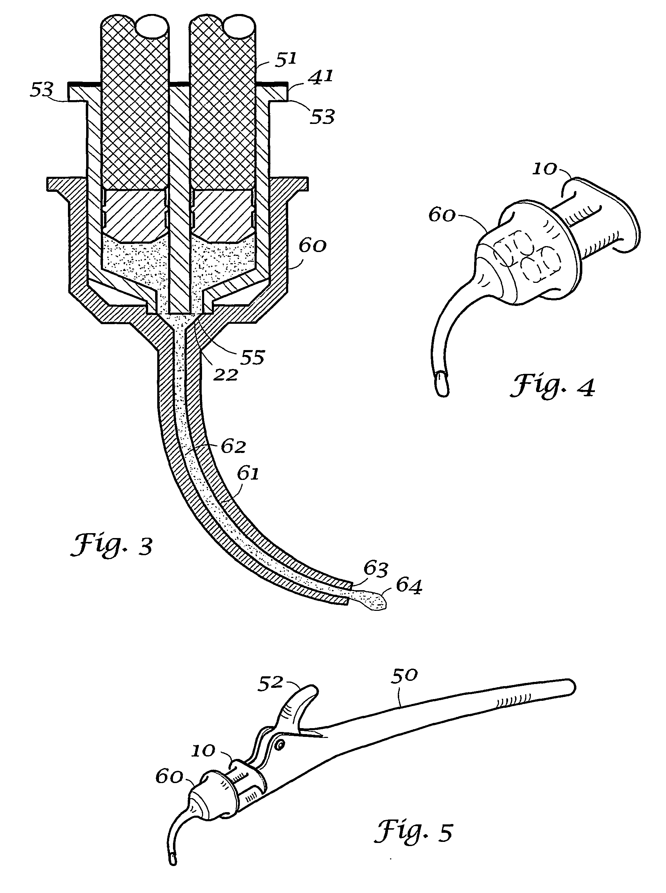

Fig. 3 is a front elevational view of a package according to the present invention, showing part of an optional plunger and an optional mix tip in place upon the package.
Fig. 4 is a perspective view of a package according to the invention, also showing an optional mix-tip.
Fig. 5 is a perspective view as in Fig. 4, showing the inventive device affixed to a dispensing gun.
Fig. 6 is a front elevational, sectional view of a package according to the present invention.
Fig. 7 is a top, plan view of one end of the inventive package with its snap-cap removed.

### PREFERRED EMBODIMENTS FOR CARRYING OUT THE INVENTION

A multiple component, unit-dose container delivery system according to the invention is shown by way of example on the drawings by the number 10. Package 10 can be used for the storing and dispensing of any type or quantity of material, but is particularly suited for storing and dispensing of dual-component dental adhesives or the like.

Package 10 includes a plurality of barrels, such as barrels 11 and 12. Package 10 is exemplifies with two barrels 11 and 12, it being understood that any numbers of such barrels is within the scope of the invention. Barrels 11 and 12 are preferably elongate having open areas 13 and 14 respectively therein.

Barrels 11 and 12 are preferably juxtaposed in their longitudinal direction, although other configurations are within the scope of the invention. Further, each barrel 11 and 12 is provided with a first, primary opening end 20 and a second end 21, each of the first ends 20 being provided with a primary opening allowing access to open areas 13 and 14 respectively.

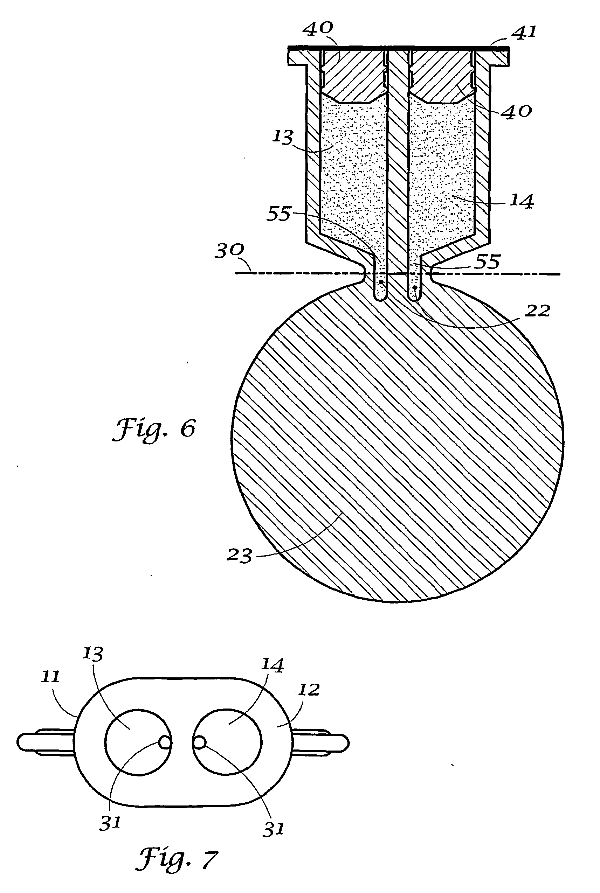

Each of the second ends 21 of barrels 11 and 12 is provided with a dispensing aperture 22 that is initially closed by snap-cap or break-cap 23. Preferably, snap-cap 23 is integrally formed with barrels 1 and 12. Further, snap-cap 23 can be broken from barrels 11 and 12 by snapping or breaking it therefrom, such as at break point 30 (Fig. 6) or some other location. Preferably when snap-cap 23 is broken from barrels 11 and 12, secondary openings 31 are formed in each of said barrels 11 and 12, such that open areas 13 and 14 can fluidly communicate therethrough, allowing for the dispensing of the materials through secondary openings 31. Preferably, barrels 11, 12 and snap cap 23 are formed from a suitable plastic material that will allow the breaking operation. More preferably, such components are preferably formed as a single unit in for example, an injection molding operation or the like.

There is also provided, a plurality of seal plungers 40, preferably at least equal to the number of barrels 11 and 12 employed. The material (not shown) to be dispensed is initially placed into open areas 13 and 14 by input through primary open ends 21 in each said barrel 13, 14. Seal plungers 40 are receivable within open areas 13 and 14, through primary openings 20, such that the material is between said seal plungers 40 and said snap-cap 23, effecting the storage function of the package 10. In this configuration, the materials within barrels 11 and 12 are prevented from being exposed to the environment. When it is desired to dispense the material, snap-cap 23 is broken from package 10, thereby creating secondary opening 22 that fluidly communicate between open areas 13 and 14 and the environment. Seal plungers are preferably formed from a deformable plastic, rubber, rubber-like or elastomeric material and dimensioned to fit snugly within open areas 13, 14, to effectively seal the open areas 13, 14 from the environment through primary openings 20.

After seal plungers 40 are received through primary openings 20 and into open areas 13 and 14, openings 20 may be further sealed with any type of layer, such as foil layer 41.

To further facilitate the dispensing of the material through secondary openings 22, a dispensing gun 50 of any design may be employed. One preferred dispensing gun has at least one gun plunger 51, and preferably the same number of gun plungers as barrels 11, 12 are present in package 10, although this is not necessary. Further still, gun 50 should have some means such as hand-lever 52 to laterally displace gun plungers toward primary openings 20 when package 10 is mounted upon gun 50. Further, package 10 should be provided with some means to removably secure package 10 to gun 50, such as lips or shoulders 53 that interact such as by a friction or snap fit to gun 10, to thereby removably secure package 10 thereto. An exemplary such gun is found in for example, commonly assigned U.S. Pat. No. 4,708,650, which is hereby incorporated by reference for such disclosure. When gun plungers 51 are laterally moved toward barrels 11, 12, the foil layer 41 may be physically impinged by and then punctured by gun plungers 51, or the foil layer 41 may be removed before such action. Further, as gun plungers 51 are laterally displaced toward barrels 11, 12, they will be received through primary openings 20 and into open areas 13, 14, to thereby physically contact plunger seals 40. Continued lateral displacement of gun plungers 51 toward end 21 of barrels 11, 12 will cause the material between end 21 and plunger seals 40 to be forced or moved toward second ends 21, to be dispensed through secondary openings 22.

A neck area 54 may be provided between snap-cap 23 and second ends 21 of barrels 11, 12, preferably such that passages 55 extend from open areas 13, 14 and at least partially into neck area 54. By being of a reduced size as compared to snap-cap 23 and/or barrels 11,12, the break area 30 is facilitated by neck area 54. Break area 30 is preferably located such that passages 55 extend on either side thereof, such that when snap-cap 23 is broken from barrels 11, 12, secondary openings 22 are thereby formed to fluidly communicate with the exterior of package 10.

Package 10 may also be provided with an integral or preferably removable mix-tip 60, such that the material dispensed through secondary openings 22 is first mixed within a mix-tip dispensing tube 61. Tube 61 may even be provided with a static mix element 62, which may be a twisted wire or the like. The material from barrels 11 and 12 are combined and mixed within tube 61, preferably the mixing being enhanced by mix element 61. Tube 61 is provided with dispensing opening 63, fluidly communicating between the interior of tube 61 and the environment. Brush bristles 64 may be located adjacent, within or surrounding dispensing opening 63 of mix tip 60, to facilitate application of the dispensed materials.

Mix-tip 60 is preferably removably affixable to package 10. Any conventional means of affixing mix-tip 60 to package 10 is within the scope of the invention, such as adhesively bonding, or more preferably by a friction of snap fit. For example, detents 70 may be provided in the mix-tip 60 interior to match and receive nubs 71, thereby holding mix-tip 60 to package 10. Nubs 71 and/or detents 70 may be formed from a plastic or other deformable material, to facilitate placement of mix-tip 60 upon package 10. Of course, package 10 may carry detents 70 and mix-tip 60 could carry nubs 71 (not shown), and still fall within the scope of the invention.

The size dimensions of package 10 may vary depending upon the nature of the materials to be dispensed, but is preferably of a unit-dose size for such materials. Double, triple or multiple unit dose sizes are also within the scope of the invention.

Various alterations and modifications of the invention will be apparent to those of ordinary skill in the art. Accordingly, it should be understood that the invention is not limited to the illustrative embodiments set forth herein.

## Claims

1. A unit-dose package for the storage and dispensing of a multi-component dental adhesive, comprising :
- a first and a second longitudinally juxtaposed barrels (11, 12);
- each said barrel having a first and a second end;
- each said first and second barrels (11, 12) having a quantity of at least one of the materials of a multi-component dental adhesive initially contained therein;
- each said barrel having an open end (13, 14) and a dispensing end;
- a sealing plunger (40) received in each said barrel such that the material in each said barrel is initially positioned between said dispensing end of said barrels and the respective ones of said sealing plungers;
- a snap cap (23) contiguously formed to initially close each of said dispensing ends of said barrels; such that said snap cap may be broken from said barrels to thereby forming secondary open ends at said dispensing ends of said barrels. ,

2. The package according to claim 1, further comprising:
- a mix-tip removably affixed to said first and second barrels and having a dispensing aperture, such that the material that is dispensed from said secondary openings is caused to flow through said mix-tip, and out through said dispensing aperture;
- a static mixing element contained within said mix-tip to promote intimate contact and mixing of the materials.

3. A storing and dispensing system for a multi-component dental adhesive comprising:
- the unit-dose package for the storage and dispensing of a multi-component dental adhesive as defined by claim 1; and
- a dispensing gun having a first and a seconded laterally displaceable gun plungers, and an actuating means for laterally displacing said gun plungers; said first and second barrels having means to removably affix said barrels to said gun; said first gun plunger being receivable within said primary open end of said first barrel, and being laterally displaceable therethrough to contact said seal plunger located in said first barrel; and, said second gun plunger being receivable within said primary open end of said second barrel, and being laterally displaceable therethrough to contact said seal plunger located in said second barrel.

4. The storing and dispensing system according to claim 3, further comprising:
- a foil seal initially closing said primary open ends of said first and second barrels, such that when said gun plungers are caused to be laterally displaced into and received by said barrels, said foil seal is first caused to be punctured by physical contact with said gun plungers.

## Patentansprüche

1. Dosierungseinheit-Packung zur Lagerung und Abgabe eines Mehrkomponenten-Dentalklebers, umfassend:
- einen ersten und einen zweiten in Längsrichtung neben einander liegenden Zylinder (11, 12);
- wobei jeder Zylinder ein erstes und ein zweites Ende aufweist;
- jeder erste und zweite Zylinder (11, 12) anfänglich eine Menge von mindestens einem der Materialien eines Mehrkomponenten-Dentalklebers darin enthält;
- jeder Zylinder ein offenes Ende (13, 14) und ein Abgabeende aufweist;
- einen Verschlusskolben (40), der in jedem der Zylinder so enthalten ist, dass das Material in jedem der Zylinder anfänglich zwischen dem Abgabeende der Zylinder und den entsprechenden Enden der Verschlusskolben vorhanden ist;
- einen angrenzend ausgebildeten Schnappverschluss (23), um anfänglich jedes der Abgabeenden der Zylinder zu verschließen; wobei der Schnappverschluss von den Zylindern abgelöst werden kann, und dadurch sekundäre offene Enden an den Abgabeenden der Zylinder bildet.

2. Packung nach Anspruch 1, die ferner umfasst:
- eine an den ersten und zweiten Zylinder entfernbar befestigte Mischspitze, die eine Abgabeöffnung aufweist, wodurch das Material, das von den sekundären Öffnungen abgegeben wird, dazu veranlasst wird, durch die Mischspitze zu fließen, und durch die Abgabeöffnung nach außen;
- ein statisches Mischelement, das innerhalb der Mischspitze enthalten ist, um einen innigen Kontakt und ein Mischen der Materialien zu fördern.

3. Lager- und Abgabesystem für einen Mehrkomponenten-Dentalkleber, umfassend:
- die Dosiereinheit-Packung zur Lagerung und Abgabe eines Mehrkomponenten-Dentalklebers nach Anspruch 1; und
- eine Abgabe-Zusatzvorrichtung, die erste und zweite lateral verschiebbare Plunger-Kolben aufweist, und ein Betätigungselement zum lateralen Verschieben der Plunger-Kolben; wobei die ersten und zweiten Zylinder Mittel aufweisen, um die Zylinder an die Zusatzvorrichtung entfernbar zu befestigen; der erste Plunger-Kolben im primären offenen Ende des ersten Zylinders aufnehmbar ist, und dadurch lateral verschiebbar ist, um den in dem ersten Zylinder befindlichen Verschlusskolben zu kontaktieren; und der zweite Plunger-Kolben im primären offenen Ende des zweiten Zylinders aufnehmbar ist, und dadurch lateral verschiebbar ist, um den in dem zweiten Zylinder befindlichen Verschlusskolben zu kontaktieren.

4. Lager- und Abgabesystem nach Anspruch 3, das ferner aufweist:
- ein Folienverschluss, der anfänglich die primären offenen Enden des ersten und zweiten Zylinders so verschließt, dass, wenn die Plunger-Kolben veranlasst werden, lateral in die Zylinder verschoben und von ihnen aufgenommen zu werden, der Folienverschluss zuerst durch den physikalischen Kontakt mit den Plunger-Kolben durchstoßen wird.

## Revendications

1. Conditionnement unidose pour le stockage et la distribution d'un adhésif dentaire à composants multiples, comportant :
- des premier et second corps cylindriques juxtaposés longitudinalement (11, 12) ;
- chaque corps cylindrique ayant des première et seconde extrémités ;
- chacun desdits premier et second corps cylindriques (11, 12) contenant initialement une quantité d'au moins l'une des matières d'un adhésif dentaire à composants multiples ;
- chaque corps cylindrique ayant une extrémité ouverte (13, 14) et une extrémité de distribution ;
- un plongeur d'obturation (40) reçu dans chaque corps cylindrique de façon que la matière contenue dans chaque corps cylindrique soit positionnée initialement entre ladite extrémité de distribution desdits corps cylindriques et certains, respectifs, desdits plongeurs d'obturation ;
- un bouchon sécable (23) formé de façon contiguë pour fermer initialement chacune desdites extrémités de distribution desdits corps cylindriques, de manière que ledit bouchon sécable puisse être rompu desdits corps cylindriques pour former ainsi des extrémités ouvertes secondaires auxdites extrémités de distribution desdits corps cylindriques.

2. Conditionnement selon la revendication 1, comportant en outre :
- un embout mélangeur fixé de façon amovible auxdits premier et second corps cylindriques et ayant un orifice de distribution, de manière que la matière qui est distribuée desdites ouvertures secondaires soit amenée à s'écouler à travers ledit embout mélangeur, et à sortir à travers ledit orifice de distribution ;
- un élément mélangeur statique contenu dans ledit embout mélangeur pour favoriser une mise en contact intime et un mélange des matières.

3. Système de stockage et de distribution pour un adhésif dentaire à composants multiples, comportant :
- le conditionnement unidose pour le stockage et la distribution d'un adhésif dentaire à composants multiples comme défini dans la revendication 1 ; et
- un pistolet de distribution ayant des premier et second plongeurs de pistolet pouvant être déplacés latéralement, et un moyen d'actionnement pour déplacer latéralement lesdits plongeurs de pistolet ; lesdits premier et second corps cylindriques ayant des moyens pour fixer de façon amovible lesdits corps cylindriques audit pistolet ; ledit premier plongeur de pistolet pouvant être reçu dans ladite extrémité ouverte primaire dudit premier corps cylindrique, et pouvant être déplacé latéralement à travers elle pour entrer en contact avec ledit plongeur d'obturation se trouvant dans ledit premier corps cylindrique ; et ledit second plongeur de pistolet pouvant être reçu dans ladite extrémité ouverte primaire dudit second corps cylindrique, et pouvant être déplacé latéralement à travers elle pour entrer en contact avec ledit plongeur d'obturation situé dans ledit second corps cylindrique.

4. Système de stockage et de distribution selon la revendication 3, comportant en outre :
- une mince membrane d'obturation fermant initialement lesdites extrémités ouvertes primaires desdits premier et second corps cylindriques, de manière que, lorsque lesdits plongeurs de pistolet sont amenés à être déplacés latéralement jusque dans lesdits corps cylindriques et reçus par ceux-ci, ladite mince membrane d'obturation est d'abord amenée à être perforée par contact physique avec lesdits plongeurs de pistolet.
